# FASCICULE DE BREVET EUROPEEN

(11) **EP 1 174 250 B1**
(45) Date de publication et mention de la délivrance du brevet: **19.10.2005**
(21) Numéro de dépôt: 01117001.6
(22) Date de dépôt: 12.07.2001
(51) Int. Cl.: B29C 70/52, B29B 15/12

(54) **Imprégnation en continu de fibres en grandes longueurs, par de la résine, pour la fabrication d'éléments composites longilignes**
Kontinuieriche Imprägnierung von sehr langen Fasern mit einem Harz zur Herstellung von langgestreckten Verbundelementen
Continuous resin impregnation of very long fibres for the manufacturing of elongated composite elements

(30) Priorité: 17.07.2000 FR 0009369
(43) Date de publication de la demande: 23.01.2002
(73) Titulaire: Conception et Développement Michelin S.A., 1762 Givisiez (CH)
(72) Inventeur: Hinc, Henri, 1756 Onnens (CH); Meraldi, Jean-Paul, 8049 Zürich (CH); Virdis, Antoine, 1772 Grolley (CH); Genoud, Fernand, 1617 Remaufens (CH)
(74) Mandataire: Bauvir, Jacques

(56) Documents cités:
- EP-A- 0 542 709
- GB-A- 1 080 562
- GB-A- 1 546 764
- US-A- 4 462 855
- US-A- 5 266 139

## Description

La présente invention se rapporte à la fabrication d'un élément composite longiligne en grande longueur, comportant des fibres de renforcement en grande longueur, noyées dans une matrice en résine durcie.

On envisage de plus en plus souvent l'utilisation de matières composites pour la fabrication de pièces de structure ou de pièces travaillantes ou d'éléments de renforcement, en raison des performances sans cesse plus élevées que permettent d'atteindre les matières composites. Souvent, les matières composites permettent des gains de masse importants à performances mécaniques équivalentes. Aussi, dans des applications où la matière composite est fortement sollicitée, il est très important de pouvoir bénéficier à plein de l'effet de renforcement des fibres. Cela suppose une grande maîtrise dans la fabrication des éléments composites.

Le rôle de la résine est de solidariser les fibres les unes par rapport aux autres et de transmettre des efforts aux fibres. Il est très important que les fibres soient totalement imprégnées et réparties de façon homogène et selon le taux de renforcement souhaité dans toute la section de l'élément en composite.

L'une des techniques connues de fabrication de pièces composite de bonnes qualités mécaniques est appelée " pultrusion ". Il s'agit de dérouler des fibres renforçantes en continu, de les dégazer par l'action du vide et de les plonger dans un bain de résine pour assurer l'imprégnation des fibres par la résine, comme décrit par exemple dans le brevet US3730678. Une autre technique propose de tirer l'ensemble fibres et résine d'imprégnation au travers d'une filière chauffée afin d'effectuer au moins partiellement la polymérisation de la résine. On peut de cette façon tirer en continu des produits de section dictée par la forme de la filière. Malheureusement, la pultrusion se prête mal à des cadences élevées, en raison d'une imprégnation plutôt lente et difficile. En outre, la cinétique du phénomène de transfert thermique limite considérablement la cadence de fabrication.

Le document GB-A-1080562 décrit un procédé pour la fabrication d'articles composites longilignes dans lequel des fibres de renforcement sont imprégnées dans une première et une deuxième chambre qui sont maintenues sous vide.

Une autre possibilité connue consiste à disposer les fibres de renforcement comme on le souhaite dans un moule, à faire le vide et enfin à imprégner les fibres par la résine. Le vide permet une imprégnation très efficace. Cette technique se prête bien à la fabrication de pièces de dimensions finies et raisonnables car on utilise un moule correspondant à la forme et aux dimensions de la pièce fabriquée. Mais lorsqu'il s'agit de fabriquer en grande longueur des pièces en continu, il n'est pas facile d'imprégner correctement les fibres. Et plus l'on souhaite accélérer les cadences de production, plus il est difficile de garantir une parfaite imprégnation des fibres par la résine.

En outre, l'essor commercial des matières composites dépend aussi de leur prix de revient. Il est donc très important de pouvoir proposer des moyens technologiques aptes à des cadences de fabrication élevées dans des conditions économiques aussi concurrentielles que possible.

L'objectif de l'invention est de parvenir à une imprégnation aussi complète que possible des fibres d'une façon qui soit compatible avec des cadences de fabrication très élevées. L'objectif est de parvenir à ce résultat d'une façon compatible avec une fabrication en continu.

L'invention propose un procédé de préparation en continu d'un élément composite longiligne en grande longueur, comprenant des fibres de renforcement noyées dans une matrice à base d'une composition comprenant une résine durcissable, comportant les étapes suivantes, comprenant des étapes visant à réaliser un arrangement de fibres de renforcement, à entraîner ledit arrangement pour le soumettre, successivement et dans la direction d'avancement, aux opérations suivantes :
- dégazer l'arrangement de fibres par l'action du vide dans une première chambre de traitement ;
- imprégner ledit arrangement de fibres par ladite composition dans une deuxième chambre de traitement séparée de la première, pour obtenir un imprégné contenant les fibres et la composition, tout en maintenant ledit arrangement isolé de l'atmosphère ;
- faire passer ledit imprégné au travers d'une filière ayant une section de surface et de forme prédéfinies, pour imposer une forme prédéterminée audit imprégné ;
- en aval de la filière, stabiliser la forme de l'imprégné par une polymérisation au moins partielle de la résine de l'imprégné.

Notons que l'on parle de "fibres en grande longueur" car la longueur n'est pas limitée par des contraintes venant du procédé de réalisation, celui-ci pouvant être qualifié de continu. Selon un aspect intéressant de la présente invention, et contrairement à la pultrusion classique, la filière de calibrage ne joue aucun rôle dans la polymérisation de la résine.

De préférence, l'étape de stabilisation est poursuivie jusqu'à ce que ladite composition forme un milieu solide (stade dit de gélification ou au delà), afin que le produit possède une cohésion suffisante pour pouvoir être manipulé par la suite, par exemple pour pouvoir subir d'autres traitements ou pour pouvoir être utilisé comme produit intermédiaire incorporé dans un produit final, avec les sollicitations mécaniques que cela suppose, sans risquer un " essorage " des fibres au cours duquel le taux de résine de la préforme diminuerait de façon non maîtrisée. L'objectif de la stabilisation est donc de préférence d'atteindre un niveau minimal de polymérisation permettant d'éviter tout écoulement de résine lors d'un traitement ultérieur de celle-ci (en fait, un traitement du composite ou de l'article dans lequel il sera incorporé) sous l'action de la température, voire sous l'action de la pression. L'objectif de la stabilisation est aussi de préférence d'atteindre un niveau minimal de polymérisation permettant de conférer à l'imprégné stabilisé une résistance au flambage de ses fibres lors d'une sollicitation ultérieure en flexion.

Avantageusement, ladite composition comprend une résine durcissable par un rayonnement ionisant et l'étape de stabilisation est effectuée au moyen d'un traitement approprié, par exemple par un rayonnement ionisant. Comme rayonnement ionisant convenable, il est proposé d'utiliser un rayonnement ultraviolet - visible dans le spectre allant de 300 nm à 450 nm ou un faisceau d'électrons accélérés. La polymérisation enclenchée par rayonnement ionisant non seulement permet d'atteindre l'état imprégné stabilisé, mais permet aussi d'arrêter le processus de polymérisation en cessant d'émettre ledit rayonnement. En effet, l'objectif de la stabilisation est encore de ne pas dépasser un niveau maximal de polymérisation, permettant le collage ultérieur de l'imprégné stabilisé, par exemple sur lui-même ou sur du caoutchouc.

On peut choisir une composition comprenant une résine durcissable par un peroxyde et l'étape de stabilisation est effectuée au moyen d'un apport de calories, par exemple par l'action de micro-ondes. On peut aussi choisir une composition comprenant une résine durcissable par un rayonnement ionisant et la polymérisation de l'étape de stabilisation est déclenchée et contrôlée au moyen d'un traitement ionisant. Cette dernière variante est plus particulièrement intéressante car elle ouvre la voie à différentes méthodes de fluidification de la résine facilitant l'imprégnation de l'arrangement de fibres.

C'est ainsi que sous un autre aspect, l'invention propose un procédé de préparation en continu d'un élément composite longiligne en grande longueur, contenant des fibres de renforcement noyées dans une matrice à base d'une composition contenant une résine durcissable par un rayonnement ionisant, comportant les étapes suivantes :
- réaliser un arrangement de fibres de renforcement, et entraîner ledit arrangement pour le soumettre, successivement et dans la direction d'avancement, aux opérations suivantes, tout en maintenant ledit arrangement isolé de l'atmosphère :

- imprégner ledit arrangement de fibres par ladite composition pour obtenir un imprégné contenant les fibres et la composition ;
- faire passer ledit imprégné au travers d'une filière ayant une section de surface et de forme prédéfinies, pour imposer une forme prédéterminée audit imprégné ;
- en aval de la filière, stabiliser la forme de l'imprégné par une polymérisation au moins partielle de la résine de l'imprégné, ladite polymérisation au moins partielle étant déclenchée et contrôlée par un rayonnement ionisant.

On peut bien évidemment encore renforcer l'efficacité de l'imprégnation par, avant l'imprégnation, un dégazage de l'arrangement de fibres par l'action du vide.

Comme rayonnement ionisant convenable, il est proposé d'utiliser un rayonnement dans le spectre allant de 300 nm à 450 nm, appelé ci-dessous par convention spectre ultraviolet - visible. Au passage, on peut faire remarquer que le niveau de polymérisation voulu est atteint en adaptant par exemple le temps de traitement aux rayonnements ultraviolet - visible (vitesse de défilement, longueur du dispositif de polymérisation).

Dans une mise en oeuvre particulière, il est proposé de contrôler expérimentalement le niveau de polymérisation au moyen d'une analyse de la dureté Shore D de la composition. Les valeurs de dureté Shore données ci-dessous sont mesurées avec un duromètre Shore D tel que décrit dans la norme NF T 46-052. Si l'on vise des duretés Shore D de l'ordre de 90 à 95 pour le composite final l'exposition à un rayonnement ionisant est de préférence arrêtée par exemple après que la dureté Shore D de la composition de l'imprégné stabilisé soit devenue supérieure à 45 et avant que la dureté Shore D de la composition de l'imprégné stabilisé soit supérieure à 65. Plus généralement, on propose que l'étape d'exposition à un rayonnement ionisant soit arrêtée après que l'indice D constitué par la dureté Shore D de la composition de l'imprégné stabilisé divisée par la dureté Shore D de la composition du composite final ait atteint une valeur de l'ordre de 0.5 et avant que ledit indice D ait atteint une valeur de l'ordre de 0.7.

On peut aussi contrôler expérimentalement le niveau de polymérisation au moyen d'une analyse de la température de transition vitreuse T_{g} de la composition. On propose une règle de bonne pratique selon laquelle, en considérant l'indice T = T_{gf} - T_{gpr}, T_{gpr} étant la température de transition vitreuse de la composition de l'imprégné stabilisé et T_{gf} étant la température de transition vitreuse de la composition du composite final, l'exposition à un rayonnement ionisant est arrêtée après que l'indice T soit devenu inférieur à 120°C et avant que ledit indice T soit devenu inférieur à 30°C. Par exemple, dans le cas où la température de transition vitreuse T_{g} de la composition du composite final serait de l'ordre de 160°C, l'exposition à un rayonnement ionisant est arrêtée après que la température de transition vitreuse T_{g} de la composition de l'imprégné stabilisé ait atteint une valeur de l'ordre de 40°C et avant que la température de transition vitreuse T_{g} de la composition de l'imprégné stabilisé ait atteint une valeur de l'ordre de 130°C.

De préférence, l'étape de stabilisation est effectuée sous atmosphère neutre. Différentes options sont possibles pour la suite. On peut envisager de poursuivre l'étape de stabilisation jusqu'à polymérisation complète de la résine. On peut aussi, après l'étape de stabilisation, soumettre l'imprégné stabilisé à un traitement thermique au cours duquel sa température est élevée, de préférence à une température supérieure à la température de transition vitreuse finale T_{g} de la composition. A titre indicatif, une température de traitement convenable est de l'ordre de 150°C au moins. Les propriétés finales du matériau ne sont pas uniquement et même pas principalement dues à la stabilisation. Elles résultent aussi en grande partie du traitement thermique supplémentaire.

Grâce au fait que le contrôle du degré de polymérisation, dans l'étape de commencement de la polymérisation de la résine, n'est pas effectué par voie thermique, il est possible d'ajuster la viscosité de la composition pendant l'étape d'imprégnation des fibres par une élévation modérée de la température de ladite composition. Par exemple, on peut chauffer jusqu'à 80°C environ, sans qu'il n'en résulte d'effet sensible sur la stabilité de la résine. Cela permet une bien meilleure imprégnation des fibres. On peut ainsi disposer d'un paramètre de réglage de la phase d'imprégnation indépendant des paramètres des étapes ultérieures du procédé.

Quant aux résines convenables, à titre d'illustration, mentionnons que la résine peut être choisie dans le groupe constitué par les résines vinylesters et les résines polyesters insaturées, ou encore peut être une résine époxyde.

Et en ce qui concerne les fibres de renforcement, mentionnons qu'elles peuvent être choisies parmi les fibres organiques comme les fibres polyacrylique haute ténacité ou les fibres polyacrylonitrile oxydé, les fibres d'alcool polyvinylique haute ténacité, les fibres polyamide aromatique ou les fibres polyamide-imide ou les fibres polyimide, les chlorofibres, les fibres polyester haute ténacité ou les fibres polyester aromatique, les fibres polyéthylène haute ténacité, les fibres polypropylène haute ténacité, les fibres de cellulose ou de rayonne ou de viscose haute ténacité, les fibres polyphénylène benzobisoxazole, les fibres polyéthylène naphténate, ou elles peuvent être choisies parmi les fibres inorganiques comme les fibres de verre, les fibres de carbone, les fibres de silice, les fibres céramiques (alumine, aluminosilicate, borosilicoaluminate). De préférence, le procédé utilise des fibres unidirectionnelles parallèles à ladite au moins une direction de renforcement privilégiée, disposées sensiblement parallèlement pendant l'imprégnation par ladite composition.

De préférence, la composition comprend un photo initiateur de polymérisation et le rayonnement est compris dans le spectre ultraviolet - visible. Dans ce cas, de préférence, on utilise une fibre de verre. La polymérisation partielle de la composition est effectuée par exposition pendant une durée appropriée sous rayonnement ultraviolet-visible (Tube UV Philips TLK 40W/03). L'imprégné s'avère suffisamment transparent aux rayonnements pour que la polymérisation soit bien homogène.

En variante ou en complément de ce qui a été dit ci-dessus concernant la viscosité de la composition, on peut aussi ajuster ladite viscosité par un monomère copolymérisable avec la résine ajouté à la composition et dont on fait varier la proportion. Par exemple, le monomère dont on fait varier la proportion est le styrène. Un photoinitiateur approprié est l'oxyde de bis(2, 4, 6-triméthylbenzoyl)-phénylphosphine (photoinitiateur Irgacure 819).

Selon un autre aspect particulier, l'invention concerne un procédé de solidarisation d'un matériau composite à du caoutchouc. A cette fin et de préférence, sur la surface de l'élément composite longiligne, on dépose une couche de colle résorcinol formaldéhyde latex (RFL). Dans une application particulière, ladite couche de colle RFL peut être séchée sans atteindre une température supérieure à 100°C, c'est à dire sans traitement thermique à haute température, avant de recevoir ladite couche de caoutchouc. Lors d'un moulage final, par exemple après incorporation de l'élément composite longiligne comme renforcement dans une matrice en caoutchouc, on obtient une bonne solidarisation entre l'élément composite longiligne et le caoutchouc. L'utilisation d'une colle RFL non polymérisée permet de ne pas recourir à des élastomères spéciaux pour coller le caoutchouc sur le matériau composite.

L'invention propose également une installation de fabrication en longueur indéfinie d'un élément composite longiligne de section finale prédéfinie, contenant des fibres de renforcement formant une section totale de fibres prédéfinie et inférieure à ladite section finale, lesdites fibres étant noyées dans une matrice à base d'une composition contenant une résine durcissable, l'installation comportant :
- une chambre à vide ;
- une tubulure d'entrée à parois rigides, ayant un orifice d'entrée et un orifice aval débouchant dans la chambre à vide, la tubulure ayant une section minimale supérieure à la section totale de fibres, la longueur de la tubulure mesurée entre l'orifice d'entrée et l'orifice aval étant très grande au regard de ladite section minimale ;
- une chambre d'imprégnation ;
- une tubulure de transfert à parois rigides entre la chambre à vide et la chambre d'imprégnation, ayant un orifice d'entrée communiquant avec la chambre à vide et un orifice aval débouchant dans la chambre d'imprégnation, la tubulure de transfert ayant une section minimale supérieure à la section totale de fibres, la longueur de la tubulure de transfert mesurée entre l'orifice d'entrée et l'orifice aval étant très grande au regard de ladite section minimale ;
- une filière de calibrage de l'élément composite longiligne,
- en aval de la filière de calibrage, des moyens pour effectuer au moins une pré-polymérisation de la résine.

L'invention permet d'imprégner efficacement et en continu l'arrangement de fibres, notamment par un traitement préalable par le vide. Auparavant, l'emploi du vide posait des problèmes d'étanchéité tels qu'il n'était utilisé en pratique que pour des fabrications de pièces au moyen d'un moule, c'est-à-dire les unes après les autres et non pas en continu. Le traitement par le vide était effectué typiquement au moyen d'une chambre fermée, dans laquelle on avait installé auparavant le groupe de fibres que l'on souhaitait imprégner.

L'utilisation de tubulures à paroi rigide, aussi bien pour l'orifice d'entrée dans la chambre à vide que pour l'orifice de sortie de la chambre à vide et le transfert depuis la chambre à vide jusqu'à la chambre d'imprégnation, s'avère compatible à la fois avec des cadences élevées de passage des fibres au travers des orifices sans rompre les fibres, mais aussi permet d'assurer une étanchéité qui s'avère suffisante. Il suffit, au besoin expérimentalement, de rechercher la plus grande section de passage, compte tenu de la section totale des fibres à traiter, permettant encore d'offrir une étanchéité suffisante, compte tenu de la vitesse d'avancement des fibres et de la longueur des tubulures. Une longueur importante favorise l'étanchéité.

Avantageusement, au moins une des tubulures a une section non croissante, de préférence convergente, en cheminant depuis l'orifice d'entrée vers l'orifice aval. Cela offre un bon compromis entre des frottements minimaux des fibres sur les parois et une bonne étanchéité. Bien entendu, l'étanchéité des tubulures dont il est question n'est que relative. Dans une optique de fonctionnement dynamique, cela signifie que la fuite d'air vers la chambre à vide est faible par rapport à la capacité d'évacuation de l'air de la pompe à vide utilisée. En pratique, les fuites de résine vers la chambre à vide sont nulles, compte tenu de la viscosité de la résine, du différentiel de pression entre la chambre à vide et la chambre d'imprégnation, de la section et de la longueur du passage entre la chambre à vide et la chambre d'imprégnation, et compte tenu de la vitesse d'avancement des fibres procurant un effet de retour de la résine vers la chambre d'imprégnation.

Deux exemples de mise en oeuvre du procédé selon l'invention vont maintenant être décrits à l'aide du dessin annexé, représentant de façon schématique différentes variantes de réalisation d'une installation de traitement selon l'invention.
La figure 1 schématise un premier mode de réalisation d'une installation selon de l'invention ;
La figure 2 est un agrandissement d'une partie de l'installation selon le premier mode de réalisation de l'invention ;
La figure 3 schématise une autre partie de l'installation selon le premier mode de réalisation de l'invention ;
La figure 4 est une vue en coupe d'un deuxième mode de réalisation d'une installation selon l'invention ;
La figure 5 est une autre vue en coupe par un plan de coupe perpendiculaire au plan de coupe de la figure 4, du même deuxième mode de réalisation d'une installation selon l'invention ;
La figure 6 est un agrandissement d'une partie de l'installation selon le deuxième mode de réalisation de l'invention ;
La figure 7 schématise une autre partie du deuxième mode de réalisation d'une installation selon l'invention.

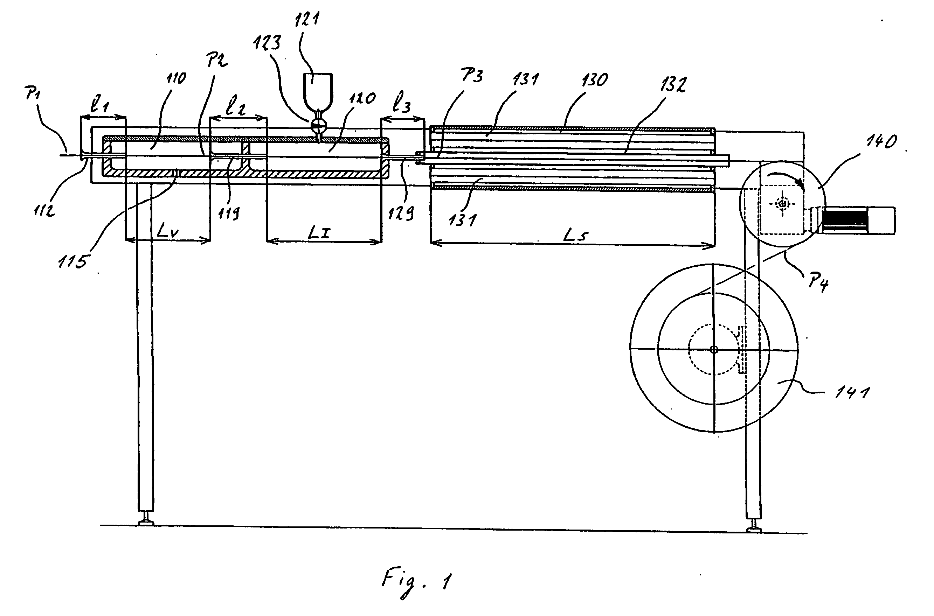

L'invention se prête à une grande variété de formes pour la section du matériau composite fabriqué, comportant les fibres appropriées noyées dans la résine choisie. Les figures 1 à 3 illustrent une installation plus particulièrement adaptée à la fabrication d'un élément composite longiligne de section ronde. A la figure 1, on voit que les fibres P1 sont déroulées en continu à partir d'une bobine. En général, les fibres de renforcement sont livrées en rovings, c'est à dire en groupes de fibres enroulées en parallèle sur une bobine (par exemple, on utilise des fibres -encore appelées filaments- commercialisées sous la désignation PPG 2001 - 300 TEX).

Par exemple, le matériau composite sort sous la forme d'un fil P4 de section ronde de taille quelconque, entraîné par un dispositif d'enroulement comportant un rouleau 140 et une bobine de réception 141. C'est la traction par le rouleau 140 qui va permettre l'avancement des fibres en parallèle tout le long de l'installation.

On aperçoit successivement une chambre à vide 110, une chambre d'imprégnation 120 et une chambre de stabilisation 130. Les fibres P1 sont introduites dans la chambre à vide 110 au travers d'une tubulure d'entrée à paroi rigide 112. La chambre à vide est reliée à une pompe à vide (non représentée) par l'orifice 115. La tubulure d'entrée 112 a pour fonction d'assurer l'étanchéité en continu et à grande vitesse. Bien que la section théorique de passage de la tubulure d'entrée 112 reste bien supérieure à la section cumulée totale de l'ensemble des fibres qui sont tractées par le rouleau 140, on a constaté que l'on parvenait à une étanchéité suffisante pour des niveaux de pression de l'ordre de 0.1 bar (pression absolue), alors que la section de la tubulure d'entrée 112 est de l'ordre de deux fois la section cumulée des fibres que l'on souhaite imprégner. On appelle « section cumulée » la somme de la section individuelle de chacune des fibres. De préférence, la longueur de la tubulure d'entrée l₁ est supérieure à 30 fois la dimension minimale d₁ de la plus petite section de la tubulure d'entrée.

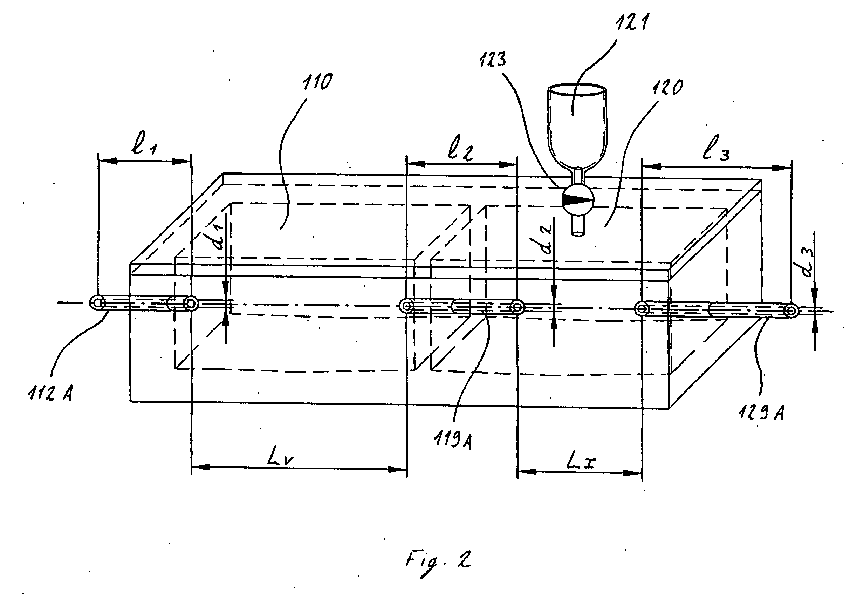

Une autre fonction possible de la tubulure d'entrée 112 est de préparer l'arrangement de fibres en fonction de la forme du composite qui va être fabriqué. Par exemple, on utilise une aiguille creuse 112A (de section circulaire, voir figure 2).

Il est souhaitable que la taille de la section de la tubulure ne soit pas déterminée indépendamment de la longueur de la tubulure. Plus la longueur de la tubulure d'entrée l₁ est grande et plus il est facile d'assurer une étanchéité dynamique au vide. En pratique, on considère que l'on a atteint une étanchéité suffisante quand le débit de fuite de l'air qui peut malgré tout passer de l'atmosphère vers l'intérieur de la chambre à vide est très inférieur au débit dont la pompe à vide est capable. Plus grande est la longueur de la tubulure d'entrée et plus on peut tolérer une section minimale grande de la tubulure d'entrée par rapport à la section des fibres qui sont déroulées au travers de l'installation.

D'une manière analogue à ce qui a été expliqué à propos de la tubulure d'entrée, la tubulure de transfert peut elle aussi être une aiguille creuse, de section circulaire (voir 119A à la figure 2).

Ensuite, on voit la chambre d'imprégnation 120. Dans l'exemple décrit ici, c'est une enceinte étanche, alimentée en résine par un réservoir 121 extérieur au moyen d'une canalisation. De préférence, une pompe doseuse 123 est insérée sur ladite canalisation. Il est ainsi possible de connaître très exactement la quantité de résine d'imprégnation utilisée. La chambre d'imprégnation 120, étanche, est totalement remplie de résine. Les fibres passent de la chambre à vide à la chambre d'imprégnation au travers de la tubulure de transfert 119 de longueur l₂. L'arrangement de fibres P2 cheminant à l'intérieur de la tubulure de transfert 119 ont subi le traitement par le vide. L'arrangement de fibres se trouve donc dans un état dans lequel sa propension à absorber la résine est très grande.

Le rôle de la tubulure de transfert 119 est aussi d'assurer l'étanchéité entre le vide et la résine qui remplit la chambre d'imprégnation. En ce qui concerne la tubulure de transfert, on a observé qu'il suffit que la longueur l₂ soit supérieure à 40 fois la dimension minimale d₂ de la section minimale, avec une section de tubulure de l'ordre de deux fois la section cumulée des fibres que l'on souhaite imprégner.

En aval de la chambre d'imprégnation, on trouve une filière de calibrage 129. Le rôle de la filière de calibrage est de mettre en forme l'imprégné P3 avant le commencement de la polymérisation de la résine. Outre la mise en forme, il convient d'assurer une grande précision dimensionnelle au produit fini. Par exemple, la filière de calibrage est de section circulaire (voir 129A à la figure 2), la longueur l₃ de la filière étant supérieure à 50 fois la plus petite dimension d₃ de la section minimale.

La filière de calibrage 129 ou 129B peut jouer un rôle dans le dosage du taux de fibre par rapport à la résine. Le taux de fibre par rapport à la résine dépend de la section minimale de passage dans la filière de calibrage par rapport à la section totale des fibres qui sont déroulées en parallèle au travers de l'installation. On verra comment on peut également contrôler le dosage au moyen d'une pompe volumétrique.

Au-delà de la filière de calibrage 129 ou 129B de l'imprégné, on trouve une chambre de stabilisation 130. La résine d'imprégnation est relativement fluide à la température ambiante. Elle n'a aucune stabilité mécanique propre. Il faut donc la faire passer en phase solide afin de pouvoir manipuler l'élément composite longiligne fusse que pour le stocker. On peut utiliser l'une des techniques connues, par exemple un amorçage de la polymérisation de la résine par voie thermique, ou comme dans cet exemple de mise en oeuvre, on peut effectuer un amorçage de la polymérisation de la résine par un rayonnement ionisant, par exemple des rayons ultraviolets.

Aussi, la chambre de stabilisation de l'installation comporte un dispositif permettant d'exposer la composition contenant lesdites fibres à un rayonnement ionisant, pour commencer la polymérisation de la résine et obtenir un imprégné stabilisé dans lequel ladite composition est sensiblement en phase solide.

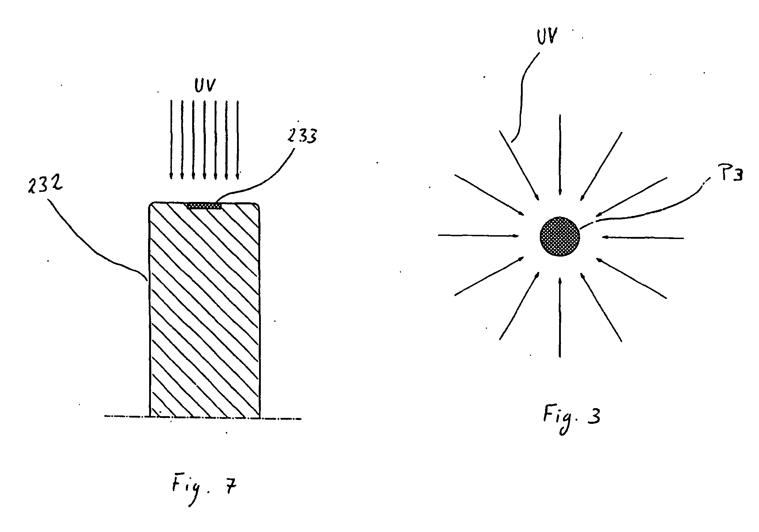

Avantageusement, ladite chambre de stabilisation comporte un tube étanche 132, qui comprend une paroi au moins en partie transparente audit rayonnement ionisant. L'étape de stabilisation de l'imprégné intervient alors que l'imprégné P3 est libre de tout contact sur un support (voir figure 3). Une source de rayonnement est disposée à l'extérieur du tube étanche 132, de façon à pouvoir exposer ladite composition de l'imprégné P3 au rayonnement UV à l'abri de l'oxygène. On voit des tubes d'irradiation 131, par exemple des tubes UV Philips TLK 40W/03 qui procurent un rayonnement dans le spectre ultraviolet - visible, placés autour du tube étanche 132.

L'installation se prête très bien à des cadences de traitement élevées. Plus la cadence est élevée, plus il convient que la longueur des différentes zones de traitement, à savoir la longueur Lᵥ de la chambre à vide 110, la longueur L₁ de la chambre d'imprégnation 120 et la longueur L_{S} de la chambre de stabilisation soient grandes.

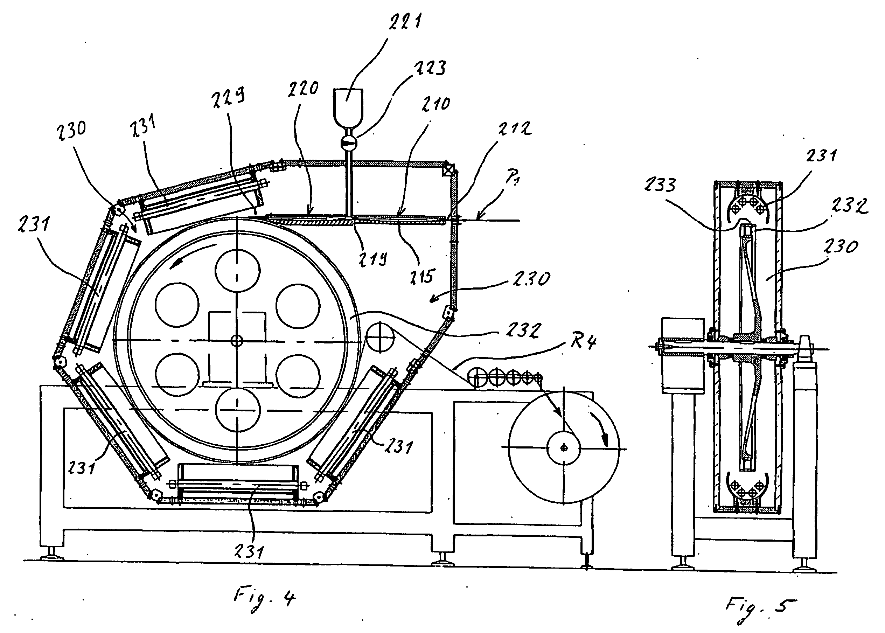

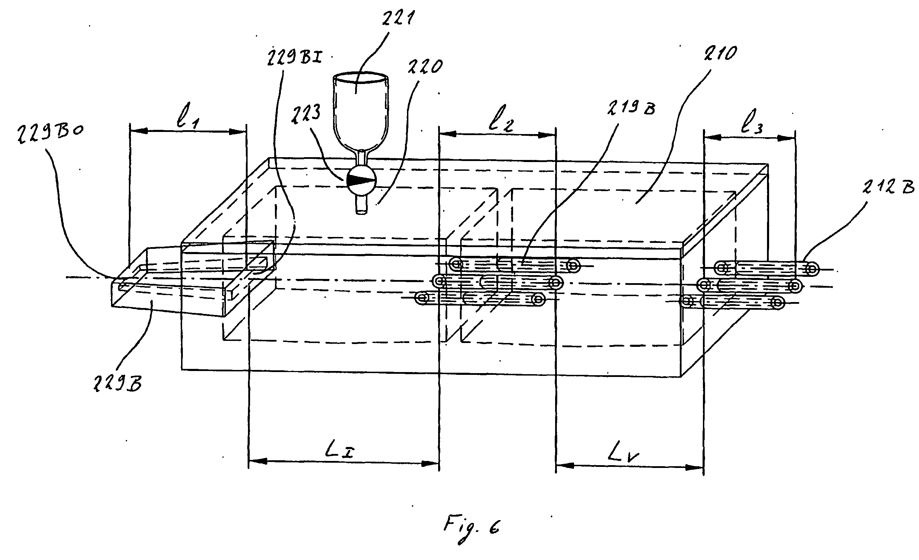

Les figures 4 à 7 illustrent une installation fabriquant un ruban R4 de section de 0.2mm par 5mm. On voit une tubulure d'entrée 212, une chambre à vide 210, une tubulure de transfert 219, une chambre d'imprégnation 220, un réservoir pour la résine 221 et une pompe doseuse 223, une filière de calibrage 229 et une chambre de stabilisation 230. La filière de calibrage est de section rectangulaire, la longueur de la filière étant supérieure à 100 fois la dimension minimale de la section minimale. A la figure 6, on voit une filière de calibrage 229B de section rectangulaire, variable entre l'entrée 229BI et la sortie 229BO. L'orifice amont de cette filière a par exemple une section de 10 mm x 0,5 mm. Les sections intermédiaires peuvent avoir des proportions différentes, tout en diminuant de surface au moins dans une partie de la filière de calibrage. Dans l'exemple choisi, la section de sortie ne correspond pas exactement à la section du ruban fabriqué, à savoir et pour rappel 5 mm x 0,2 mm. La dimension de l'orifice aval de la filière de calibrage peut être légèrement supérieure (par exemple 5.3 mm x 0.25 mm).

Rappelons que la tubulure d'entrée a aussi pour fonction d'assurer une première mise en forme du composite qui va être fabriqué. Il s'agit aussi de répartir de façon aussi homogène que possible la totalité des fibres dans la totalité de la section de passage offerte par la tubulure d'entrée. Il est suggéré d'assurer une répartition homogène en multipliant les guidages au sein de la tubulure d'entrée. Par exemple, celle-ci est formée par un agencement d'aiguilles creuses 212B, de section circulaire, disposées en parallèle (voir figure 6).

Dans la seconde variante, l'étape de stabilisation de l'imprégné intervient alors que l'imprégné est en contact constant sur un support, sans glissement relatif. Les fibres P1 sont introduites dans la chambre à vide 210 au travers de la tubulure d'entrée à paroi rigide 212. La chambre à vide est reliée à une pompe à vide (non représenté). En dehors de la chambre de stabilisation, l'installation est fort semblable et il est donc inutile de revenir en détail sur ces aspects.

La chambre de stabilisation 230 comprend une jante mobile 232 à la périphérie de laquelle est aménagée une surface de support 233 (voir figure 7) définissant partiellement ladite section finale prédéfinie de l'élément composite longiligne. Par exemple, pour fabriquer un ruban de section rectangulaire, on aménage de préférence une gorge à la périphérie de la jante 232, les faces de ladite gorge formant surface de support. La surface de support 233 est rotative. L'imprégné est donc supporté sans glissement pendant le traitement de stabilisation. La chambre de stabilisation 230 englobe la chambre à vide 210 et la chambre d'imprégnation 220. Par cet agencement, on peut aisément installer l'imprégné sortant de l'orifice de calibrage 229 sur un support, tout en le protégeant de l'oxydation. On peut par exemple prévoir une atmosphère neutre (azote). On voit des tubes d'irradiation 231, par exemple des tubes UV Philips TLK 40W/03 qui procurent un rayonnement dans le spectre ultraviolet - visible, placés autour de la jante 232. Ainsi, la chambre de stabilisation de l'installation comporte un dispositif permettant d'exposer la composition contenant lesdites fibres, en couche mince, à un rayonnement ionisant, pour commencer la polymérisation de la résine et obtenir un imprégné stabilisé dans lequel ladite composition est sensiblement en phase solide.

Les installations décrites offrent la possibilité de fabriquer en grande longueur des renforts de section quelconque, soit à l'état de composite fini (polymérisation complète de la résine) ou de l'imprégné stabilisé (au sens où la polymérisation de la résine n'est pas complète, mais a atteint un stade suffisant pour qu'au moins les surfaces extérieures du produit soient en phase solide et que des manipulations du produit soient raisonnablement possibles sans le détruire). On peut fabriquer des rubans de section rectangulaire comme expliqué ci-dessus. On peut aussi fabriquer des fils, par exemple de section ronde, qui peuvent par exemple servir de renfort de type monofilamentaire pour des pneumatiques en caoutchouc.

Il s'avère que les installations décrites permettent de très grandes cadences de fabrication tout en atteignant et en maintenant des niveaux de vide relativement élevés dans la chambre à vide, garant d'une très bonne imprégnation des fibres par la résine. Ceci se fait avec un taux de casse des fibres négligeable. Les sections des tubulures d'entrée et de transfert sont toutes sensiblement plus grandes que la section totale des fibres. Il y a très peu de frottement des fibres sur les parois. Malgré cela, on atteint une étanchéité suffisante entre l'atmosphère et les différentes chambres et entre les chambres entre elles. Les changements de dimensions et/ou de sections des produits fabriqués sont très simples car il suffit de remplacer les tubulures d'entrée, de transfert et filière de calibrage. Ces éléments sont donc conçus de façon à pouvoir être facilement changés.

Le procédé selon l'invention permet de maintenir les conditions de traitement depuis l'entrée des fibres jusqu'à la réalisation du préimprégné sans que ni les fibres, ni l'ensemble formé par les fibres et la composition d'imprégnation ne soient soumis à l'atmosphère ambiante avant que le préimprégné ne soit devenu suffisamment stable. Par exemple, une ou plusieurs enceintes permettent de maintenir ledit arrangement isolé de l'atmosphère, dynamiquement parlant. Cela permet de maintenir de façon contrôlée les paramètres du traitement. Par ailleurs, le recours à des enceintes de traitement séparées pour le dégazage et l'imprégnation, lorsque les deux opérations sont prévues, a pour avantage de permettre le contrôle des dites opérations indépendamment l'une de l'autre.

Enfin, on peut très facilement agir sur le taux des fibres par rapport à la résine de plusieurs manières. De préférence, on réserve à la section de passage le rôle de définir essentiellement la forme finale de l'élément composite longiligne. Bien que la section de passage ne soit pas sans rapport avec le taux de fibres, on agit de préférence sur le taux de fibres par rapport à la résine en utilisant une pompe doseuse volumétrique. En faisant varier le débit de résine injectée dans la chambre d'imprégnation, on peut à vitesse de défilement constante pour les fibres déroulées en parallèle, faire varier quelque peu le taux de résine par rapport à aux fibres en forçant plus ou moins la résine à sortir par la filière de calibrage. L'invention offre la possibilité de fabriquer un composite ou un imprégné stabilisé en très petites sections, pratiquement sans limite inférieure.

La surface de la section cumulée des fibres dudit arrangement est de préférence inférieure à 80% de la surface de la section de ladite filière, afin de ne pas tasser les fibres et afin de traiter correctement l'ensemble comportant les fibres et la résine d'imprégnation. Le procédé proposé permet notamment de préparer un préimprégné dans lequel la surface de la section cumulée des fibres dudit arrangement et la surface de la section de résine sont sensiblement équivalentes. De préférence, l'installation selon l'invention est telle que la surface de la section de la tubulure d'entrée et la surface de la section de la filière de calibrage diffèrent avantageusement de moins de 20%.

Toutes les fibres de renfort usuelles peuvent être utilisées sur une telle installation, notamment les fibres de verre ou de carbone. Dans l'exemple présenté, on utilise des fibres de verre. Bien entendu, la résine utilisée peut aussi comporter un certain nombre d'adjuvants, participant ou non aux réactions de gélification et de polymérisation, tels que, résines thermoplastiques, plastifiants, anti-retrait, démoulant interne, colorants... Ce procédé de fabrication d'élément composite longiligne permet d'atteindre des taux volumiques de fibres très élevés, jusqu'à 50 %.

## Revendications

1. Procédé de préparation en continu d'un élément composite longiligne en grande longueur, comprenant des fibres de renforcement noyées dans une matrice à base d'une composition comprenant une résine durcissable, comprenant des étapes visant à réaliser un arrangement de fibres de renforcement, à entraîner ledit arrangement pour le soumettre, successivement et dans la direction d'avancement, aux opérations suivantes :
- dégazer l'arrangement de fibres par l'action du vide dans une première chambre, de traitement ;
- imprégner ledit arrangement de fibres par ladite composition dans une deuxième chambre de traitement séparée de la première, pour obtenir un imprégné contenant les fibres et la composition tout en maintenant ledit arrangement isolé de l'atmosphère ;
- faire passer ledit imprégné au travers d'une filière ayant une section de surface et de forme prédéfinies, pour imposer une forme prédéterminée audit imprégné ;
- en aval de la filière, stabiliser la forme de l'imprégné par une polymérisation au moins partielle de la résine de l'imprégné.

2. Procédé selon la revendication 1 dans lequel ladite composition comprend une résine durcissable par un peroxyde et l'étape de stabilisation est effectuée au moyen d'un apport de calories.

3. Procédé selon la revendication 1 dans lequel ladite composition comprend une résine durcissable par un rayonnement ionisant et la polymérisation de l'étape de stabilisation est déclenchée et contrôlée au moyen d'un traitement ionisant.

4. Procédé selon la revendication 3 dans lequel ladite composition comprend un photo initiateur de polymérisation et le rayonnement ionisant est compris dans le spectre ultraviolet - visible.

5. Procédé selon l'une des revendications 1 à 4, dans lequel la polymérisation au moins partielle de l'étape de stabilisation est poursuivie jusqu'à ce que ladite composition forme un milieu solide.

6. Procédé selon l'une des revendications 3 à 5 dans lequel l'exposition à un rayonnement ionisant est arrêtée après que l'indice T = T_{gf} - T_{gpr} soit devenu inférieur à 120°C et avant que ledit indice T soit devenu inférieur à 30°C, T_{gpr} étant la température de transition vitreuse de la composition à la fin de l'exposition à un rayonnement ionisant et T_{gf} étant la température de transition vitreuse de la composition de l'élément composite longiligne final.

7. Procédé selon l'une des revendications 3 à 5 dans lequel l'exposition à un rayonnement ionisant est arrêtée après que l'indice D = Dᵢ/D_{f} ait atteint une valeur de l'ordre de 0.5 et avant que ledit indice D ait atteint une valeur de l'ordre de 0.7, Dᵢ étant la dureté Shore D de la composition à la fin de l'exposition à un rayonnement ionisant et D_{f} étant la dureté Shore D de la composition de l'élément composite longiligne final.

8. Procédé selon l'une des revendications 3 à 7dans lequel, après l'étape de stabilisation, on consolide la composition en soumettant l'imprégné stabilisé à une élévation de température.

9. Procédé selon l'une des revendications 3 à 8 dans lequel on ajuste la viscosité de ladite composition, pendant l'étape d'imprégnation des fibres, par une élévation de température de ladite composition.

10. Procédé selon l'une des revendications 1 à 9, dans lequel la résine est choisie dans le groupe constitué par les résines vinylesters et les résines polyesters insaturées.

11. Procédé selon l'une des revendications 1 à 10, dans lequel la résine est une résine époxyde.

12. Procédé selon l'une des revendications 3 à 11, dans lequel ladite composition comprend un monomère copolymérisable avec la résine et dans lequel on ajuste la viscosité de ladite composition en faisant varier la proportion de monomère.

13. Procédé selon la revendication 12, dans lequel ledit monomère est du styrène.

14. Procédé selon la revendication 4 dans lequel ledit photo initiateur de polymérisation est l'oxyde de bis(2, 4, 6-triméthylbenzoyl)-phénylphosphine.

15. Procédé selon l'une des revendications 1 ou 2, dans lequel les fibres de renforcement sont choisies dans le groupe constitué par les fibres polyacrylique haute ténacité, les fibres polyacrylonitrile oxydé, les fibres d'alcool polyvinylique haute ténacité, les fibres polyamide aromatique, les fibres polyamide-imide, les fibres polyimide, les chlorofibres, les fibres polyester haute ténacité, les fibres polyester aromatique, les fibres polyéthylène haute ténacité, les fibres polypropylène haute ténacité, les fibres de cellulose, les fibres de rayonne, les fibres de viscose haute ténacité, les fibres polyphénylène benzobisoxazole, les fibres polyéthylène naphténate, les fibres de verre, les fibres de carbone, les fibres de silice, les fibres céramiques.

16. Procédé selon l'une des revendications 3 à 15, dans lequel les fibres de renforcement sont des fibres de verre.

17. Procédé selon l'une des revendications 1 à 16 dans lequel on recouvre l'imprégné stabilisé par une couche de colle résorcinol formaldéhyde latex (RFL).

18. Procédé selon la revendication 17 dans lequel ladite couche de colle RFL est séchée sans atteindre une température supérieure à 100°C.

19. Procédé selon l'une des revendications 1 à 18, dans lequel l'étape de stabilisation de l'imprégné intervient alors que l'imprégné est libre de tout contact sur un support.

20. Procédé selon l'une des revendications 1 à 18, dans lequel l'étape de stabilisation de l'imprégné intervient alors que l'imprégné est en contact constant sans glissement sur un support.

21. Procédé selon l'une des revendications 1 à 20, dans lequel ledit arrangement comporte des fibres en grande longueur et parallèles à une direction de renforcement privilégiée dudit élément composite longiligne.

22. Procédé selon l'une des revendications 1 à 21, dans lequel la surface de la section cumulée des fibres dudit arrangement est inférieure à 80% de la surface de la section de ladite filière.

23. Procédé selon l'une des revendications 1 à 22, dans lequel l'étape de stabilisation est effectuée sous atmosphère neutre.

24. Installation de fabrication en longueur indéfinie d'un élément composite longiligne de section finale prédéfinie, contenant des fibres de renforcement formant une section totale de fibres prédéfinie et inférieure à ladite section finale, lesdites fibres étant noyées dans une matrice à base d'une composition contenant une résine durcissable, l'installation comportant :
- une chambre à vide (110, 210) ;
- une tubulure d'entrée à parois rigides (112, 212), ayant un orifice d'entrée et un orifice aval débouchant dans la chambre à vide, la tubulure ayant une section minimale supérieure à la section totale de fibres, la longueur de la tubulure mesurée entre l'orifice d'entrée et l'orifice aval étant très grande au regard de ladite section minimale ;
- une chambre d'imprégnation (120, 220) ;
- une tubulure de transfert (119, 219) à parois rigides entre la chambre à vide et la chambre d'imprégnation, ayant un orifice d'entrée communiquant avec la chambre à vide et un orifice aval débouchant dans la chambre d'imprégnation, la tubulure de transfert ayant une section minimale supérieure à la section totale de fibres, la longueur de la tubulure de transfert mesurée entre l'orifice d'entrée et l'orifice aval étant très grande au regard de ladite section minimale ;
- une filière de calibrage (129, 229) de l'élément composite longiligne,
- en aval de la filière de calibrage, des moyens pour effectuer au moins une pré-polymérisation de la résine.

25. Installation selon la revendication 24 dans laquelle au moins une des tubulures a une section non croissante en cheminant depuis l'orifice d'entrée vers l'orifice aval.

26. Installation selon la revendication 24 ou 25 dans laquelle, en ce qui concerne la tubulure d'entrée, la longueur est supérieure à 30 fois la dimension minimale de la section minimale.

27. Installation selon l'une des revendications 24 à 26, dans laquelle en ce qui concerne la tubulure de transfert, la longueur est supérieure à 40 fois la dimension minimale de la section minimale.

28. Installation selon l'une des revendications 24 à 27, dans laquelle la filière de calibrage est de section circulaire, la longueur de la filière étant supérieure à 50 fois le diamètre de la section minimale.

29. Installation selon l'une des revendications 24 à 27 , dans laquelle la filière de calibrage est de section rectangulaire, la longueur de la filière étant supérieure à 100 fois la dimension minimale de la section minimale.

30. Installation selon l'une des revendications 24 à 28, dans laquelle la tubulure d'entrée est formée par un agencement d'aiguilles creuses (212B), de section circulaire, disposées en parallèle.

31. Installation selon l'une des revendications 24 à 28, dans laquelle la tubulure de transfert est formée par un agencement d'aiguilles creuses (219B), de section circulaire, disposées en parallèle.

32. Installation selon l'une des revendications 24 à 31, dans laquelle la chambre d'imprégnation est une enceinte étanche, alimentée en résine par un réservoir (121, 221) extérieur au moyen d'une canalisation.

33. Installation selon la revendication 32, dans laquelle une pompe doseuse (123, 223) de résine est insérée sur ladite canalisation.

34. Installation selon l'une des revendications 24 à 33, dans laquelle lesdits moyens pour effectuer au moins une pré-polymérisation comprennent une chambre de stabilisation.

35. Installation selon la revendication 34, dans laquelle ladite chambre de stabilisation comporte un dispositif permettant d'exposer la composition contenant lesdites fibres, en couche mince, à un rayonnement ionisant, pour commencer la polymérisation de la résine et obtenir une composition sensiblement en phase solide.

36. Installation selon la revendication 35 agencée de façon à pouvoir exposer ladite composition sous une atmosphère neutre.

37. Installation selon la revendication 35 ou 36, dans laquelle ledit dispositif permettant d'exposer comporte des tubes d'irradiation (131, 231) procurant un rayonnement (UV) dans le spectre ultraviolet - visible.

38. Installation selon l'une des revendications 34 à 37, dans laquelle la chambre de stabilisation comprend une jante mobile (232) à la périphérie de laquelle est aménagée une surface de support définissant partiellement ladite section finale prédéfinie dudit élément composite longiligne.

39. Installation selon l'une des revendications 34 à 38, dans lequel la surface de la tubulure d'entrée et la surface de la filière de calibrage diffèrent de moins de 20%.

## Patentansprüche

1. Verfahren zur kontinuierlichen Herstellung eines sehr langen langgestreckten Verbundwerkstoff-Teils, das Verstärkungsfasern enthält, die in eine Matrix auf der Basis einer Zusammensetzung eingebettet sind, die ein härtbares Harz enthält, wobei das Verfahren Schritte umfasst, die zum Ziel haben, eine Anordnung von Verstärkungsfasern herzustellen und die Anordnung fortzubewegen, um sie nacheinander und in Vorwärtsrichtung den folgenden Arbeitsgängen zu unterziehen:
- Entgasen der Anordnung von Fasern durch Vakuumeinwirkung in einer ersten Behandlungskammer,
- Imprägnieren der Anordnung von Fasern mit der Zusammensetzung in einer zweiten Behandlungskammer, die von der ersten Behandlungskammer getrennt ist, zur Herstellung eines imprägnierten Produkts, das die Fasern und die Zusammensetzung enthält, wobei die Anordnung unter Luftabschluss gehalten wird,
- Hindurchleiten des imprägnierten Produkts durch eine Düse mit einem Querschnitt vorgegebener Fläche und Form, um das imprägnierte Produkt in eine vorbestimmte Form zu bringen, und
- stromabwärts der Düse Stabilisieren der Form des imprägnierten Produkts durch eine zumindest teilweise Polymerisation des Harzes des imprägnierten Produkts.

2. Verfahren nach Anspruch 1, worin die Zusammensetzung ein Harz enthält, das durch ein Peroxid härtbar ist, und worin der Stabilisierungsschritt mittels Energiezufuhr durchgeführt wird.

3. Verfahren nach Anspruch 1, worin die Zusammensetzung ein Harz enthält, das durch eine ionisierende Strahlung härtbar ist, und worin die Polymerisation des Stabilisierungsschritts mittels einer ionisierenden Behandlung ausgelöst und gesteuert wird.

4. Verfahren nach Anspruch 3, worin die Zusammensetzung einen Photoinitiator für die Polymerisation enthält und worin die ionisierende Strahlung im Spektralbereich ultraviolett - sichtbar liegt.

5. Verfahren nach einem der Ansprüche 1 bis 4, worin die zumindest teilweise Polymerisation des Stabilisierungsschritts fortgeführt wird, bis die Zusammensetzung ein festes Medium bildet.

6. Verfahren nach einem der Ansprüche 3 bis 5, worin die Bestrahlung mit einer ionisierenden Strahlung beendet wird, nachdem der Index T = T_{gf}-T_{gpr} einen Wert unter 120 °C erreicht hat und bevor der Index T einen Wert unter 30 °C erreicht hat, wobei T_{gpr} die Glasübergangstemperatur der Zusammensetzung am Ende der Bestrahlung mit einer ionisierenden Strahlung und T_{gf} die Glasübergangstemperatur der Zusammensetzung des am Ende vorliegenden langgestreckten Verbundwerkstoff-Teils ist.

7. Verfahren nach einem der Ansprüche 3 bis 5, worin die Bestrahlung mit einer ionisierenden Strahlung beendet wird, nachdem der Index D = Dᵢ/D_{f} einen Wert in der Größenordnung von 0,5 erreicht hat und bevor dieser Index D einen Wert in der Größenordnung von 0,7 erreicht hat, wobei Dᵢ die Shore D-Härte der Zusammensetzung am Ende der Bestrahlung mit einer ionisierenden Strahlung ist und D_{f} die Shore D-Härte der Zusammensetzung des am Ende vorliegenden langgestreckten Verbundwerkstoff-Teils ist.

8. Verfahren nach einem der Ansprüche 3 bis 7, worin die Zusammensetzung nach dem Stabilisierungsschritt verfestigt wird, indem das stabilisierte imprägnierte Produkt einer Temperaturerhöhung ausgesetzt wird.

9. Verfahren nach einem der Ansprüche 3 bis 8, worin die Viskosität der Zusammensetzung während des Schritts zum Imprägnieren der Fasern durch eine Erhöhung der Temperatur der Zusammensetzung eingestellt wird.

10. Verfahren nach einem der Ansprüche 1 bis 9, worin das Harz unter den Vinylester-Harzen und den Polyester-Harzen, die ungesättigt sind, ausgewählt wird.

11. Verfahren nach einem der Ansprüche 1 bis 10, worin es sich bei dem Harz um ein Epoxyharz handelt.

12. Verfahren nach einem der Ansprüche 3 bis 11, worin die Zusammensetzung ein Monomer enthält, das mit dem Harz copolymerisierbar ist, und worin die Viskosität der Zusammensetzung durch Variation des Mengenanteils des Monomers eingestellt wird.

13. Verfahren nach Anspruch 12, worin es sich bei dem Monomer um Styrol handelt.

14. Verfahren nach Anspruch 4, worin der Photoinitiator für die Polymerisation Bis(2,4,6-Trimethylbenzoyl)-phenylphosphinoxid ist.

15. Verfahren nach einem der Ansprüche 1 oder 2, worin die Verstärkungsfasern unter den Fasern aus hochzähem Polyacryl, den Fasern aus oxidiertem Polyacrylnitril, den Fasern aus hochzähem Polyvinylalkohol, den aromatischen Polyamidfasern, den Polyamidimidfasern, den Polyimidfasern, den Polychloridfasern, den Fasern aus hochzähem Polyester, den Fasern aus aromatischem Polyester, den Fasern aus hochzähem Polyethylen, den Fasern aus hochzähem Polypropylen, den Cellulosefasern, den Rayonfasern oder den Fasern aus hochzäher Viskose, den Fasern aus Polyphenylenbenzobisoxazol, den Fasern aus Polyethylennaphthenat, den Glasfasern, den Kohlenstoff-Fasern, den Quarzfasern und den keramischen Fasern ausgewählt werden.

16. Verfahren nach einem der Ansprüche 3 bis 15, worin es sich bei den Verstärkungsfasern um Glasfasern handelt.

17. Verfahren nach einem der Ansprüche 1 bis 16, worin das stabilisierte imprägnierte Produkt mit einer Schicht von Resorcin-Formaldehyd-Latex (RFL)-Klebstoff überzogen wird.

18. Verfahren nach Anspruch 17, worin die RFL-Klebstoffschicht getrocknet wird, ohne dass die Temperatur über 100 °C steigt.

19. Verfahren nach einem der Ansprüche 1 bis 18, worin der Schritt zur Stabilisierung des imprägnierten Produkts stattfindet, während das imprägnierte Produkt in keinerlei Kontakt zu einem Träger steht.

20. Verfahren nach einem der Ansprüche 1 bis 18, worin der Schritt zur Stabilisierung des imprägnierten Produkts stattfindet, während das imprägnierte Produkt in ständigem Kontakt mit einem Träger ist, ohne dass es gleiten gelassen wird.

21. Verfahren nach einem der Ansprüche 1 bis 20, worin die Anordnung Fasern umfasst, die sehr lang sind und die zu einer bevorzugten Verstärkungsrichtung des langgestreckten Verbundwerkstoff-Teils parallel sind.

22. Verfahren nach einem der Ansprüche 1 bis 21, worin die Fläche des kumulierten Querschnitts der Fasern der Anordnung weniger als 80 % der Fläche des Querschnitts der Düse beträgt.

23. Verfahren nach einem der Ansprüche 1 bis 22, worin der Stabilisierungsschritt in neutraler Atmosphäre durchgeführt wird.

24. Anlage zur Fertigung eines langgestreckten Verbundwerkstoff-Teils mit unbestimmter Länge, das am Ende einen vorab definierten Querschnitt aufweist und das Verstärkungsfasern enthält, die einen Gesamtfaserquerschnitt bilden, der vorab definiert ist und der kleiner ist als der am Ende vorliegende Querschnitt, wobei die Fasern in eine Matrix auf Basis einer Zusammensetzung eingebettet werden, die ein härtbares Harz enthält, wobei die Anlage umfasst:
- eine Vakuumkammer (110, 210),
- ein Eingangsrohr (112, 212) mit starren Wänden, das eine Einlassöffnung und eine Öffnung stromabwärts aufweist, die in die Vakuumkammer mündet, wobei das Rohr einen minimalen Querschnitt hat, der größer ist als der Gesamtfaserquerschnitt, und wobei die zwischen der Einlassöffnung und der Öffnung stromabwärts bestimmte Länge des Rohrs bezogen auf den minimalen Querschnitt sehr groß ist,
- eine Imprägnierkammer (120, 220),
- ein Verbindungsrohr (119, 219) mit starren Wänden zwischen der Vakuumkammer und der Imprägnierkammer, das eine Einlassöffnung aufweist, die mit der Vakuumkammer in Verbindung steht, und eine Öffnung stromabwärts, die in die Imprägnierkammer mündet, wobei das Verbindungsrohr einen minimalen Querschnitt hat, der größer ist als der Gesamtfaserquerschnitt, und wobei die zwischen der Einlassöffnung und der Öffnung stromabwärts bestimmte Länge des Verbindungsrohrs bezogen auf den minimalen Querschnitt sehr groß ist,
- eine Düse zum Kalibrieren (129, 229) des langgestreckten Verbundwerkstoff-Teils und
- stromabwärts der Kalibrierdüse Mittel, um zumindest eine Vorpolymerisation des Harzes durchzuführen.

25. Anlage nach Anspruch 24, worin mindestens eines der Rohre einen Querschnitt aufweist, der im Verlauf von der Einlassöffnung in Richtung der Öffnung stromabwärts nicht zunimmt.

26. Anlage nach Anspruch 24 oder 25, worin bei dem Eingangsrohr die Länge 30 Mal größer ist als die minimale Abmessung des minimalen Querschnitts.

27. Anlage nach einem der Ansprüche 24 bis 26, worin bei dem Verbindungsrohr die Länge 40 Mal größer ist als die minimale Abmessung des minimalen Querschnitts.

28. Anlage nach einem der Ansprüche 24 bis 27, worin die Kalibrierdüse einen runden Querschnitt aufweist, wobei die Länge der Düse 50 Mal größer ist als der Durchmesser des minimalen Querschnitts.

29. Anlage nach einem der Ansprüche 24 bis 27, worin die Kalibrierdüse einen rechteckigen Querschnitt aufweist, wobei die Länge der Düse 100 Mal größer ist als die minimale Abmessung des minimalen Querschnitts.

30. Anlage nach einem der Ansprüche 24 bis 28, worin das Eingangsrohr von einer Anordnung von Hohlnadeln (212B) mit rundem Querschnitt gebildet wird, die parallel zueinander angeordnet sind.

31. Anlage nach einem der Ansprüche 24 bis 28, worin das Verbindungsrohr von einer Anordnung von Hohlnadeln (219B) mit rundem Querschnitt gebildet wird, die parallel zueinander angeordnet sind.

32. Anlage nach einem der Ansprüche 24 bis 31, worin es sich bei der Imprägnierkammer um einen dichten geschlossenen Raum handelt, der aus einem außen gelegenen Behälter (121, 221) über eine Rohrleitung mit Harz versorgt wird.

33. Anlage nach Anspruch 32, worin eine Dosierpumpe (123, 223) für Harz in die Rohrleitung eingefügt ist.

34. Anlage nach einem der Ansprüche 24 bis 33, worin die Mittel zur Durchführung zumindest einer Vorpolymerisation eine Stabilisierungskammer umfassen.

35. Anlage nach Anspruch 34, worin die Stabilisierungskammer eine Vorrichtung umfasst, mit der die Zusammensetzung, die die Fasern enthält, in dünner Schicht einer ionisierenden Strahlung ausgesetzt werden kann, um die Polymerisation des Harzes zu starten und eine Zusammensetzung zu erhalten, die im Wesentlichen in fester Phase vorliegt.

36. Anlage nach Anspruch 35, die so aufgebaut ist, dass die Zusammensetzung in neutraler Atmosphäre bestrahlt werden kann.

37. Anlage nach Anspruch 35 oder 36, worin die Vorrichtung, mit der bestrahlt werden kann, Bestrahlungsröhren (131, 231) umfasst, die eine (UV) Strahlung im Spektralbereich ultraviolett - sichtbar liefern.

38. Anlage nach einem der Ansprüche 34 bis 37, worin die Stabilisierungskammer einen beweglichen Radkranz (232) umfasst, in dessen Randbereich eine Stützfläche eingerichtet ist, die den vorgegebenen Endquerschnitt des langgestreckten Verbundwerkstoff-Teils zum Teil bestimmt.

39. Anlage nach einem der Ansprüche 34 bis 38, worin die Fläche des Eingangsrohrs und die Fläche der Kalibrierdüse weniger als 20 % voneinander abweichen.

## Claims

1. A process for the continuous preparation of a long elongate composite element comprising reinforcement fibres embedded in a matrix based on a composition comprising a curable resin, comprising stages intended to arrange reinforcement fibres and convey this arrangement so as to subject it, successively and in the feed direction, to the following operations:
- degassing the arrangement of fibres by the action of a vacuum, in a first treatment chamber;
- impregnating said arrangement of fibres with said composition in a second treatment chamber separate from the first, to obtain a pre-preg containing the fibres and the composition, while keeping said arrangement out of contact with the atmosphere;
- passing said pre-preg through a die having a cross section of predetermined area and shape, to provide said pre-preg with a predetermined shape;
- downstream of the die, stabilising the shape of the pre-preg by at least partial polymerisation of the pre-preg resin.

2. A process according to Claim 1, in which said composition comprises a resin curable by a peroxide and the stabilisation stage is performed by means of a heat supply.

3. A process according to Claim 1, in which said composition comprises a resin curable by ionising radiation and stabilisation stage polymerisation is initiated and controlled by means of an ionising treatment.

4. A process according to Claim 3, in which said composition comprises a polymerisation photoinitiator and the ionising radiation is contained within the ultraviolet-visible spectrum.

5. A process according to one of Claims 1 to 4, in which the at least partial polymerisation at the stabilisation stage continues until said composition forms a solid medium.

6. A process according to one of Claims 3 to 5, in which exposure to ionising radiation is stopped once the index T = T_{gf} - T_{gpr} has fallen below 120°C and before said index T has fallen below 30°C, T_{gpr} being the glass transition temperature of the composition upon completion of exposure to ionising radiation and T_{gf} being the glass transition temperature of the composition of the final elongate composite element.

7. A process according to one of Claims 3 to 5, in which exposure to ionising radiation is stopped once the index D = Dᵢ/D_{f} has reached a value of the order of 0.5 and before said index D has reached a value of the order of 0.7, Dᵢ being the Shore D hardness of the composition upon completion of exposure to ionising radiation and D_{f} being the Shore D hardness of the composition of the final elongate composite element.

8. A process according to one of Claims 3 to 7, in which, after the stabilisation stage, the composition is consolidated by subjecting the stabilised pre-preg to an increase in temperature.

9. A process according to one of Claims 3 to 8, in which the viscosity of said composition is adjusted, during the fibre impregnation stage, by raising the temperature of said composition.

10. A process according to one of Claims 1 to 9, in which the resin is selected from the group consisting of vinyl ester resins and unsaturated polyester resins.

11. A process according to one of Claims 1 to 10, in which the resin is an epoxy resin.

12. A process according to one of Claims 3 to 11, in which said composition comprises a monomer copolymerisable with the resin and in which the viscosity of said composition is adjusted by varying the proportion of monomer.

13. A process according to Claim 12, in which said monomer is styrene.

14. A process according to Claim 4, in which said polymerisation photoinitiator is the oxide of bis(2,4,6-trimethylbenzoyl)phenyl phosphine.

15. A process according to one of Claims 1 or 2, in which the reinforcement fibres are selected from the group comprising high-tenacity polyacrylic fibres, oxidised polyacrylonitrile fibres, high-tenacity polyvinyl alcohol fibres, aromatic polyamide fibres, polyamide-imide fibres, polyimide fibres, chlorofibres, high-tenacity polyester fibres, aromatic polyester fibres, high-tenacity polyethylene fibres, high-tenacity polypropylene fibres, cellulose fibres, rayon fibres, high-tenacity viscose fibres, polyphenylene benzobisoxazole fibres, polyethylene naphthenate fibres, glass fibres, carbon fibres, silica fibres, ceramic fibres.

16. A process according to one of Claims 3 to 15, in which the reinforcement fibres are glass fibres.

17. A process according to one of Claims 1 to 16, in which the stabilised pre-preg is covered with a layer of resorcinol/formaldehyde latex (RFL) adhesive.

18. A process according to Claim 17, in which said layer of RFL adhesive is dried without reaching a temperature greater than 100°C.

19. A process according to one of Claims 1 to 18, in which the pre-preg stabilisation stage proceeds while the pre-preg is completely out of contact with a support.

20. A process according to one of Claims 1 to 18, in which the pre-preg stabilisation stage proceeds while the pre-preg is in constant slip-free contact with a support.

21. A process according to one of Claims 1 to 20, in which said arrangement comprises long fibres parallel to a preferential reinforcement direction of said elongate composite element.

22. A process according to one of Claims 1 to 21, in which the surface area of the combined cross section of the fibres of said arrangement is less than 80% of the surface area of the cross section of said die.

23. A process according to one of Claims 1 to 22, in which the stabilisation stage is performed in an inert atmosphere.

24. An installation for manufacturing an elongate composite element in undefined lengths but of predetermined final cross section, said composite element containing reinforcement fibres forming a predetermined total fibre cross section smaller than said final cross section, said fibres being embedded in a matrix based on a composition containing a curable resin, the installation comprising:
- a vacuum chamber (110, 210);
- rigid-walled inlet tubing (112, 212), having an inlet orifice and a downstream orifice opening into the vacuum chamber, the tubing having a minimum cross section greater than the total fibre cross section, the length of the tubing measured between the inlet orifice and the downstream orifice being very considerable in relation to said minimum section;
- an impregnation chamber (120, 220);
- rigid-walled transfer tubing (119, 219) between the vacuum chamber and the impregnation chamber, having an inlet orifice communicating with the vacuum chamber and a downstream orifice opening into the impregnation chamber, the transfer tubing having a minimum cross section greater than the total fibre cross section, the length of the transfer tubing measured between the inlet orifice and the downstream orifice being very considerable in relation to said minimum section;
- a sizing die (129, 229) for the elongate composite element,
- downstream of the sizing die, means of at least prepolymerising the resin.

25. An installation according to Claim 24, in which at least one of the tubings has a cross section which does not increase as it travels from the inlet orifice towards the downstream orifice.

26. An installation according to Claim 24 or 25, in which, as far as the inlet tubing is concerned, the length is more than 30 times the minimum dimension of the minimum cross section.

27. An installation according to one of Claims 24 to 26, in which, as far as the transfer tubing is concerned, the length is more than 40 times the minimum dimension of the minimum cross section.

28. An installation according to one of Claims 24 to 27, in which the sizing die is of circular cross section, the length of the die being more than 50 times the diameter of the minimum cross section.

29. An installation according to one of Claims 24 to 27, in which the sizing die is of rectangular cross section, the length of the die being more than 100 times the minimum dimension of the minimum cross section.

30. An installation according to one of Claims 24 to 28, in which the inlet tubing is formed by an arrangement of hollow needles (212B) of circular cross section and disposed in parallel.

31. An installation according to one of Claims 24 to 28, in which the transfer tubing is formed by an arrangement of hollow needles (219B) of circular cross section and disposed in parallel.

32. An installation according to one of Claims 24 to 31, in which the impregnation chamber is a tight enclosure supplied with resin via an external tank (121, 221) by means of a pipe.

33. An installation according to Claim 32, in which a resin metering pump (123, 223) is inserted into said pipe.

34. An installation according to one of Claims 24 to 33, in which said means for performing at least prepolymerisation comprise a stabilisation chamber.

35. An installation according to Claim 34, in which said stabilisation chamber comprises a device allowing exposure of the composition containing said fibres in a thin layer to ionising radiation, to initiate polymerisation of the resin and obtain a composition substantially in the solid phase.

36. An installation according to Claim 35, arranged in such a way as to be able to expose said composition in an inert atmosphere.

37. An installation according to Claim 35 or 36, in which said device allowing exposure comprises irradiation tubes (131, 231) providing radiation (UV) in the ultraviolet-visible spectrum.

38. An installation according to one of Claims 34 to 37, in which the stabilisation chamber comprises a mobile rim (232), at the periphery of which there is formed a support surface partially defining said predetermined final cross section of said elongate composite element.

39. An installation according to one of Claims 34 to 38 in which the surface area of the inlet tubing and the surface area of the sizing die differ by less than 20%.
